Europäisches Patentamt

European Patent Office

Office européen des brevets

(11) Publication number: **0 043 251**
**B1**

(12) **EUROPEAN PATENT SPECIFICATION**

(45) Date of publication of patent specification: **03.10.84**

(21) Application number: **81302882.6**

(22) Date of filing: **25.06.81**

(51) Int. Cl.³: **B 01 J 23/64,** B 01 J 31/28,
C 01 B 3/04

(54) Catalyst for the photodecomposition of water, and a process for the preparation thereof.

(30) Priority: **30.06.80 IT 2312380**
**07.11.80 IT 2582880**

(43) Date of publication of application:
**06.01.82 Bulletin 82/01**

(45) Publication of the grant of the patent:
**03.10.84 Bulletin 84/40**

(84) Designated Contracting States:
**BE CH DE FR GB IT LI NL**

(56) References cited:
FR-A-2 347 098

ZEITSCHRIFT FÜR NATURFORSCHUNG, vol.
34a, no. 9, September 1979, TÜBINGEN (AT) M.
GOHN et al.: "Homogeneous Photoredox
System for Hydrogen Production by Solar
Energy" pages 1135-1139

(73) Proprietor: **SIBIT S.p.A.**
**31, Foro Buonaparte**
**Milan (IT)**

(72) Inventor: **Visca, Mario**
**52, Spalto Marengo**
**I-15100 Alessandria (IT)**

(74) Representative: **Whalley, Kevin et al**
**Marks & Clerk 57/60 Lincoln's Inn Fields**
**London WC2A 3LS (GB)**

(56) References cited:
JOURNAL OF THE CHEMICAL SOCIETY,
CHEMICAL COMMUNICATIONS, 1980,
LETCHWORTH (GB) K. DOMEN et al.:
"Photocatalytic Decomposition of Water
Vapour on an NiO-SrTiO3 Catalyst", pages
543-544
ANGEWANDTE CHEMIE INTERNATIONAL
EDITION, vol. 19, no. 8, 1980, Verlag Chemie,
WEINHEIM (DE) J. KIWI et al.: "Cyclic Water
Cleavage by Visible Light: Drastic
Improvement of Yield of H2 and O2 with
Bifunctional Redox Catalysts", pages 646-648

Courier Press, Leamington Spa, England.

## Description

The present invention relates to a catalyst for the photodecomposition of water and to a process for the preparation thereof.

It is known to decompose water by the action of solar energy, this decomposition being based on the formation in an aqueous solution, by radiation with visible light, of activated complexes of a redox system capable of reacting on suitable catalysts in order to yield $H_2$ and $O_2$.

Thus, for instance, there is known the photo-oxidization of water by means of $Fe^{3+}$ and quinone in the presence of ZnO, $TiO_2$ and $WO_3$.

Another reaction, used for photo-chemically decomposing water, foresees the use, in the presence of Pt and $RuO_2$ colloidal catalysts, of a redox system formed of ruthenium trisbipyridyl and methylviologen (N,N'-dimethylbipyridine).

More precisely, the system works in the following way: the ruthenium trisbipyridyl in its reduced form $Ru(bipi)_3^{2+}$, reduces the methylviologen $MV^{2+}$ under the action of visible light, thereby obtaining:

1st) the reduced $MV^+$ which reduces the water to $H_2$ on a Pt catalyst, regenerating $MV^{2+}$;

2nd) the oxidized $Ru(bipi)_3^{3+}$ which oxidizes the water to $O_2$ on a $RuO_2$ catalyst, thereby regenerating $Ru(bipi)_3^{2+}$.

The yields of $H_2$ and $O_2$, obtained through this method, are very low.

Furthermore, there is known the use of a ruthenium trisbipyridyl-methylviologen redox system in the presence of a catalyst of colloidal platinum and EDTA (ethylenediamine-tetraacetic acid). The EDTA is oxidized by the oxidized form of ruthenium trisbipyridyl, as a result of which only $H_2$ is formed, with a yield that is greater than that of the previously described system but still rather low.

Thus, one object of the present invention is that of providing a new catalyst for the photodecomposition of water that will ensure high decomposition yields.

Still another object of the invention is that of providing a new catalyst which will allow the photodecomposition of water to be achieved by means of a simplified redox system or in the absence of a redox system.

The present invention in one aspect provides a catalyst for the photodecomposition of water, which comprises particles of $TiO_2$ doped with Nb, and containing on their surface $RuO_2$.

In the catalyst according to the invention the niobium is inside the $TiO_2$ particles and acts as a doping substance, while ruthenium is present on the surface of the $TiO_2$ particles in the form of $RuO_2$.

The quantity of ruthenium oxide contained in the catalyst is preferably from 0.001% to 10% by weight, calculated as $RuO_2$ on the $TiO_2$, more preferably from 0.02% to 2% by weight.

The quantity of niobium contained in the catalyst is preferably from 0.001% to 10% by weight, calculated as $Nb_2O_5$ on the $TiO_2$, more preferably from 0.1 to 3% by weight.

The $TiO_2$ may be used in amorphous form, either as $TiO_2$ or as metatitanic acid (titanium dioxide hydrate), or in crystalline form (rutile or anatase). The two crystalline forms may be present contemporaneously. The $TiO_2$ may also consist of a product partially amorphous and partially crystalline.

The $TiO_2$ particles preferably have a size of from 5 nm to 10 micrometre, more preferably from 5 nm to 1 micrometre.

These particle sizes are referred to the particles in a dispersion, either in an aggregated form or in the shape of single particles.

The invention in another aspect provides a process for the preparation of a catalyst according to the first aspect of the invention, comprising adding a soluble compound of pentavalent niobium to a solution of $TiOSO_4$ and $FeSO_4$ coming from the sulphuric digestion of titaniferous material; heating the solution up to a temperature of from 90°C to the boiling temperature of the solution, followed by dilution with water to obtain a metatitanic acid precipitate containing Nb; filtering and washing the resulting slurry and adding to the filtration cake a solution of a soluble rthenium salt; and drying and then preferably heating the product thus obtained in air.

The catalyst according to this invention may thus be prepared in the following way. To a solution of $TiOSO_4$ and $FeSO_4$ (coming from the sulphuric digestion of ilmenite or other titaniferous material) there is added a soluble pentavalent niobium compound, for instance $Nb_2O_5$, in the desired quantity. Subsequently, the solution is heated up to a temperature of from 90°C to the boiling temperature (preferably from 96° to 108°C) and is then diluted with water, while keeping the temperature constant until complete hydrolysis is achieved, according to the Blumenfeld method. The metatitanic acid slurry containing Nb is then filtered and washed. To the filtration cake is then added a solution of a soluble ruthenium salt, for instance $RuCl_3$, in the desired quantity. Subsequently, the product thus obtained is dried under vacuum, for instance under a vacuum of $4 \times 10^4$ Pa (300 mm Hg), operating for instance at 110°C. Preferably the product is then heated in the air, for example at a temperature of 80°—120°C.

By this method of preparation there is obtained a partially amorphous product the microcrystalline phase of which is anatase.

Another method of preparation comprises, for instance, converting the Nb-containing metatitanic acid into sodium titanate by treatment under heat with sodium hydroxide, and then hydrolyzing under heat the sodium titanate to $TiO_2$ by the addition of hydrochloric acid.

The product thus obtained is then coated with $RuO_2$, as in the previous case. In this instance there is obtained a partially hydrated crystalline product of a rutile structure.

The catalyst according to the invention may be used in the presence of a water reducing catalyst consisting of colloidal platinum The redox system may consist, for instance, of ruthenium trisbipyridyl and methylviologen. In this system, the catalyst according to this invention, which may be represented by the formula: $TiO_2/Nb/RuO_2$, has a concentration of, for instance, from 100 mg/lt to 1 g/lt; the colloidal Pt has for instance a diameter of about 3 nm and, for instance, a concentration of about 40 mg/lt.

The ruthenium trisbipyridyl has a concentration of, for instance, from 1 to $3.10^{-4}$ mols/lt, while the methylviologen has a concentration of, for instance, about $5.10^{-3}$ mols/lt.

In this system as well as in the systems that will be described subsequently, the pH of the dispersion is from 3 to 7, preferably from 3.8 to 5.

By this system, the yield of $H_2$ is much higher with respect to the one obtained using $RuO_2$ as a catalyst instead of $TiO_2/Nb/RuO_2$, and remains stable.

The catalyst according to the invention may also be used in a system that contains colloidal Pt, ruthenium trisbipyridyl, methylviologen and EDTA.

In this system, the concentration of EDTA is, for instance, equal to $5.10^{-2}$ mols/lt, while the concentrations of the other components are equal to those previously defined. By this system there is obtained only $H_2$, with yields that are still better than those previously achieved.

The catalyst according to the invention may likewise be used with a simplified redox system.

In fact it has been found that a system consisting of $TiO_2/Nb/RuO_2$, ruthenium trisbipyridyl and colloidal Pt (that is, a system free of methyl viologen) is capable of producing $H_2$ and $O_2$.

The catalyst according to the invention may also be used in the absence of a redox system; in fact, it has been found that a system consisting of $TiO_2/NB/RuO_2$ and colloidal Pt (i.e. free of ruthenium trisbipyridyl and methylviologen) is capable of producing $H_2$ and $O_2$ if, instead of sunlight, there is used for the radiation ultraviolet rays.

It is presumed that the $RuO_2$ that is present on the surface of the $TiO_2$ particles does not form a continuous coating; presumably there are spots (sites) of $RuO_2$ that cover only part of the particle surface.

It is presumed that in the systems for photodecomposition of water described hereinabove, the particles of colloidal Pt will be adsorbed on the surface of the $TiO_2/Nb/RuO_2$ catalyst.

The invention will be further described with reference to the following illustrative Examples.

## Example 1

A catalyst according to the invention was prepared in the following way.

There was used a starting sulphuric solution of $TiOSO_4$ and $Fe^{++}$, coming from the sulphuric digestion of ilmenite, containing 0.2% by weight of Nb (calculated as $Nb_2O_5$ with respect to the $TiO_2$), the niobium coming from the ilmenite mineral.

The solution was thereupon heated up to 95° to 100°C and then diluted with water in a ratio of 20 parts by volume of water to 80 parts by volume of sulphuric solution, according to the Blumenfeld method.

At the end of the hydrolysis, 100 g of meta-titanic acid (calculated as $TiO_2$) were added as an aqueous slurry in a concentration of 250 g/lt (as $TiO_2$), under stirring, to 200 ml of a 50% b.w. NaOH solution at a temperature of 90°C.

The slurry was kept under stirring for 2 hours at a temperature greater than or equal to 90°C and then, after dilution in a 1:1 volumetric ratio with distilled water, was filtered and washed until there was obtained a content in $Na_2O$ of the washing water of less than 1 g/lt.

To the thus obtained sodium titanate, dispersed in water in a concentration of 200 g/lt (as $TiO_2$), was added a 30% b.w. HCl solution, in such a quantity that, after heating up to 60°C under stirring, the pH was $3 \pm 0.1$.

To the slurry thus obtained was added further HCl in a 30% by weight concentration, the quantity of HCl being equivalent to a molor ratio of $HCl:TiO_2 = 0.9$. The resulting slurry was thereupon heated at boiling temperature for 2 hours.

Once the reaction was completed, the slurry was diluted with distilled water until a concentration of $TiO_2$ equal to 100 g/lt was obtained. The dispersion thus obtained consisted of particles of acicular $TiO_2$ of a rutile structure and having a particle size from 100 to 200 nm.

To a quantity of slurry containing 1 g of $TiO_2$ was then added 1 ml of $RuCl_3$ solution (0.2 g $RuCl_3 \cdot H_2O$/100 ml of $H_2O$).

The quantity of $RuCl_3$ was such as to yield 0.1% of $RuO_2$ with respect to $TiO_2$. The dispersion thus obtained was then homogenized in a supersonant bath for about 1 minute, and was then dried under a vacuum of about $4 \times 10^4$ Pa at 50°C overnight.

The use of the catalyst for the decomposition of water by the action of sunlight is described in the following.

An aqueous dispersion of finely comminuted Pt (with a particle diameter of about 3 nm) was admixed with an aqueous dispersion of the catalyst. To the dispersion thus obtained were then added, under constant stirring, ruthenium trisbipyridyl chloride and methylviologen.

The pH was adjusted to 4.7. In the resulting dispersion the following concentrations were found:

Pt = 40 mg/lt
$TiO_2/Nb/RuO_2$ = 500 mg/lt
ruthenium trisbipyridyl chloride
    = $1.10^{-4}$ mol/lt
methylviologen = $5.10^{-3}$ mols/lt.

25 ml of the dispersion was placed in a 35 ml glass flask having two optically flat windows and provided with a stirrer. The dispersion was treated with a current of nitrogen in order to eliminate the air. For the illumination of the sample with visible light, there was used a 450 Watt Xenon lamp. From the radiations emitted by the lamp were eliminated the infrared and ultraviolet components, by means of a water-filled glass flask 15 cm thick and a filter retaining the radiations of wavelength below 400 nm.

During radiation, the dispersion was kept under stirring. The gas present in the flask was then analyzed in order to determine the concentrations of $H_2$ and $O_2$. There was observed a generation velocity of the hydrogen equal of 45 ml/hour per liter of solution and a generation velocity of the oxygen equal to 16 ml/hour per liter of solution.

### Example 2

The following example illustrates the use of the catalyst of the preceding example 1 in a system in which the EDTA is oxidized, thus producing only hydrogen.

The dispersion used for the purpose was identical with that of example 1, except for the presence of EDTA in a concentration of $5.10^{-2}$ mols/lt.

The dispersion was subjected to radiation with visible light, as described in example 1.

There was found a generation velocity of the hydrogen of 300 ml/hour per liter of solution.

### Example 3

A catalyst according to this invention was prepared in the following way.

To a sulphuric solution of $TiOSO_4$ and $Fe^{2+}$ (coming from the sulphuric digestion of ilmenite) was added $Nb_2O_5$ taken in such a quantity as to obtain 0.4% b.w. $Nb_2O_5$ with respect to the $TiO_2$, and the solution was then heated up to 95° to 100°C and then diluted with water in a ratio of 20 parts by volume of water to 80 parts by volume of sulphuric solution, according to the Blumenfeld method.

The metatitanic acid slurry thus obtained was filtered and washed in order to eliminate the soluble impurities.

To a quantity of concentrated slurry containing 1 g of $TiO_2$ was added a solution containing 1 mg of $RuCl_3$ (calculated as $RuO_2$) so as to obtain 0.1% of $RuO_2$ with respect to the $TiO_2$ in the final product. The product was then dried under a vacuum of about $4 \times 10^4$ Pa at about 110°C overnight.

The $TiO_2$ was partially amorphous and exhibited a microcrystalline anatase structure. It was formed of aggregates of primary particles, the size of the aggregates being equal to 100—200 nm while the diameter of the primary particles was from 5 to 15 nm.

There was then prepared a dispersion of the catalyst with colloidal Pt and ruthenium trisbipyridyl chloride (in the absence of methylviologen).

The concentrations of the components in the dispersion were as follows.

> Pt = 40 mg/lt
> $TiO_2/Nb/RuO_2$ = 500 mg/lt
> Ruthenium trisbipyridyl chloride
>     = $2.10^{-4}$ mols/lt.

The pH of the dispersion was 4.5.

The dispersion was then subjected to radiation with visible light as in example 1.

It was found that, even in the absence of methylviologen, the system produced $H_2$ and $O_2$.

### Example 4

There was prepared a dispersion of the catalyst described in example 3 with colloidal Pt (in the absence of ruthenium trisbipyridyl and methylviologen).

The concentrations of the components of the dispersion were as follows:

> Pt = 40 mg/lt
> $TiO_2/Nb/RuO_2$ = 500 mg/lt.

The pH of the dispersion was 4.5.

The radiation was conducted with the same lamp as that used in example 1, but in the absence of the filter which eliminates the radiations of a wavelength below 400 nm, whereby the dispersion was also subjected to ultraviolet rays.

It was found that the system produced $H_2$ and $O_2$, while being free of the ruthenium trisbipyridyl and methylviologen redox system.

### Claims

1. A catalyst for the photodecomposition of water, characterized in that the catalyst comprises particles of $TiO_2$ doped with Nb, the said particles containing on their surface $RuO_2$.

2. A catalyst as claimed in claim 1, characterized in that the quantity of niobium (expressed as $Nb_2O_5$) is from 0.001% to 10% by weight with respect to the $TiO_2$ and the quantity of $RuO_2$ (expressed as $RuO_2$) is from 0.001% to 10% by weight with respect to the $TiO_2$.

3. A catalyst as claimed in claim 1 or 2, characterized in that the particle size of the $TiO_2$ is from 5 nm to 10 micrometre.

4. A process for the preparation of a catalyst according to claim 1, characterized by adding a soluble compound of pentavalent niobium to a solution of $TiOSO_4$ and $FeSO_4$ coming from the sulphuric digestion of titaniferous material; heating the solution up to a temperature of from 90°C to the boiling temperature of the solution, followed by dilution with water to obtain a metatitanic acid precipitate containing Nb; filtering and washing the resulting slurry and adding to the filtration cake a solution of a soluble ruthenium salt; and drying and then preferably heating the product thus obtained in air.

5 A process for the preparation of a catalyst according to claim 1, characterized by adding a soluble compound of pentavalent niobium to a solution of $TiOSO_4$ and $FeSO_4$ coming from the sulphuric digestion of titaniferous material; heating the solution up to a temperature of from 90°C to the boiling temperature of the solution, followed by dilution with water to obtain a metatitanic acid precipitate containing Nb; converting the said precipitate into sodium titanate containing Nb by treatment under heat with sodium hydroxide; hydrolyzing under heat the sodium titanate containing Nb to $TiO_2$ containing Nb by the addition of hydrochloric acid; adding to the $TiO_2$ containing Nb a solution of a soluble ruthenium salt; and drying and then preferably heating the product thus obtained in air.

6. A process as claimed in claim 4 or 5, characterized in that the said titaniferous material is ilmenite.

7. A process as claimed in any of claims 4 to 6, characterized in that the final product is heated in air at a temperature of from 80° to 120°C.

## Revendications

1. Un catalyseur pour la photodécomposition de l'eau, caractérisé en ce que ce catalyseur comprend des particules de $TiO_2$ dopées par Nb, lesdites particules contenant à leur surface du $RuO_2$.

2. Un catalyseur ainsi que revendiqué dans la revendication 1, caractérisé en ce que la quantité de niobium (exprimé en tant que $Nb_2O_5$) est comprise entre 0,001% et 10% en poids par rapport à $TiO_2$ et que la quantité de $RuO_2$ (exprimé en tant que $RuO_2$) est comprise entre 0,001% et 10% en poids par rapport à $TiO_2$.

3. Un catalyseur ainsi que revendiqué dans la revendication 1 ou 2, caractérisé en ce que la dimension des particules de $TiO_2$ est comprise entre 5 nm et 10 micromètres.

4. Un procédé de préparation d'un catalyseur selon la revendication 1, caractérisé en ce que l'on ajoute un composé soluble de niobium pentavalent à une solution de $TiOSO_4$ et de $FeSO_4$ provenant de la digestion sulfurique de matière titanifère, en ce que l'on chauffe la solution juqu'à une température comprise entre 90°C et la température d'ébullition de la solution, ce chauffage étant suivi d'une dilution à l'aide d'eau afin d'obtenir un précipité à base d'acide métatitanique contenant Nb; en ce que l'on filtre et lave la suspension résultante puis ajoute au gâteau de filtration une solution d'un sel de ruthénium soluble, puis en ce que l'on sèche et, de préférence, chauffe le produit ainsi obtenu dans de l'air.

5. Un procédé de préparation d'un catalyseur conforme à la revendication 1, caractérisé en ce que l'on ajoute un composé soluble de niobium pentavalent à une solution de $TiSO_4$ et

de $FeSO_4$ provenant de la digestion sulfurique de matière titanifère, en ce que l'on chauffe la solution jusqu'à une température comprise entre 90°C et la température d'ébullition de la solution, ce chauffage étant suivi d'une dilution à l'aide d'eau pour obtenir un précipité à base d'acide métatitanique contenant Nb, en ce que l'on convertit le précipité obtenu en titanate de sodium contenant Nb par traitement, sous l'action de chaleur, par de l'hydroxyde de sodium; en ce que l'on hydrolyse sous action de chaleur le titanate de sodium contenant Nb en $TiO_2$ contenant Nb par addition d'acide chlorhydrique, en ce que l'on ajoute au $TiO_2$ contenant Nb une solution d'un sel de ruthénium soluble et en ce que l'on sèche et de préférence chauffe le produit ainsi obtenu dans l'air.

6. Un procédé ainsi que revendiqué dans la revendication 4 ou 5, caractérisé en ce que la matière titanifère est l'ilménite.

7. Un procédé ainsi que revendiqué dans l'une quelconque des revendications 4 à 6, caractérisé en ce que le produit final est chauffé dans l'air à une température comprise entre 80 et 120°C.

## Patentansprüche

1. Ein Katalysator für die Photozersetzung von Wasser, dadurch gekennzeichnet, daß der Katalysator Teilchen von mit Nb dotiertem $TiO_2$ umfaßt, wobei diese Teilchen an ihrer Oberfläche $RuO_2$ enthalten.

2. Ein Katalysator nach Anspruch 1, dadurch gekennzeichnet, daß die Menge an Niob (ausgedrückt als $Nb_2O_5$) von 0,001 bis 10 Gew.-%, bezogen auf das $TiO_2$, und die Menge an $RuO_2$ (ausgedrückt als $RuO_2$) von 0,001 bis 10 Gew.-%. bezogen auf das $TiO_2$, beträgt.

3. Ein Katalysator nach Anspruch 1 oder 2, dadurch gekennzeichnet, daß die Teilchengröße von dem $TiO_2$ von 5 nm bis 10 $\mu$m beträgt.

4. Verfahren zur Herstellung eines Katalysators nach Anspruch 1, dadurch gekennzeichnet, daß man eine lösliche Verbindung von fünfwertigem Niob zu einer Lösung von $TiOSO_4$ und $FeSO_4$, die aus einem schwefelsauren Aufschluß von titanhaltigem Material stammt, zugibt, die Lösung bis auf eine Temperatur von 90°C bis zum Siedepunkt der Lösung erhitzt und danach mit Wasser verdünnt, um Nb-enthaltende Metatitansäure auszufällen, filtriert und die erhaltene Aufschlämmung wäscht, und zu dem Filterkuchen eine Lösung von löslichem Rutheniumsalz zugibt, trocknet und dann vorzugsweise das so erhaltene Produkt an der Luft erhitzt.

5. Verfahren zur Herstellung eines Katalysators nach Anspruch 1, dadurch gekennzeichnet, daß man eine lösliche Verbindung von fünfwertigem Niob zu einer Lösung von $TiOSO_4$ und $FeSO_4$, die von einem schwefelsauren Aufschluß an tintanhaltigem Material stammt, zugibt, die Lösung bis auf eine Temperatur von 90°C bis zum Siedepunkt der Lösung erhitzt, danach mit Wasser verdünnt, um eine Nb-enthaltende Metatitansäure auszufällen, diese Ausfällung zu Nb-enthaltendem Natriumtitanat durch Behandlung mit Natriumhydroxid in der Hitze umwandelt, das Nb-enthaltende Natrium-titanat zu $TiO_2$, das Nb enthält, durch die Zugabe von Chlorwasserstoff hydrolysiert, zu dem Nb-enthaltenden $TiO_2$ eine Lösung von löslichem Rutheniumsalz zugibt und trocknet und dann vorsugsweise das so erhaltene Produkt an der Luft erhitzt.

6. Verfahren nach Anspruch 4 oder 5, dadurch gekennzeichnet, daß das titanhaltige Material Ilmenit ist.

7. Verfahren nach einem der Ansprüche 4 bis 6, dadurch gekennzeichnet, daß das Endprodukt an der Luft auf eine Temperatur von 80 bis 120°C erhitzt wird.